# EUROPÄISCHE PATENTANMELDUNG

(11) **EP 1 348 941 A1**
(43) Veröffentlichungstag der Anmeldung: **01.10.2003**
(21) Anmeldenummer: 02006895.3
(22) Anmeldetag: 26.03.2002
(51) Int. Cl.: G01J 9/00

(54) **Vorrichtung zur Wellenlängenmessung eines Laserstrahls**

(71) Anmelder: Acterna Eningen GmbH, 72800 Eningen (DE)
(72) Erfinder: Fuhrmann, Thomas, 72800 Eningen (DE); Löcklin, Eberhard, 72766 Reutlingen (DE)
(74) Vertreter: KOHLER SCHMID + PARTNER

(57) **Zusammenfassung**

Eine Vorrichtung (1) zur Wellenlängenmessung eines Laserstrahls (2) innerhalb eines vorbestimmten Gesamtwellenlängenbereichs umfaßt parallele Meßpfade (3-8), auf die der Laserstrahl (2) aufgeteilt wird und die jeweils ein optisches Filter (3a-8a) und einen Detektor (3b-8b) zum Erfassen der optischen Leistung aufweisen, wobei zumindest einige optische Filter (4a-8a) eine auf dem Gesamtwellenlängenbereich über die Wellenlänge periodische Durchlaßcharakteristik mit jeweils unterschiedlicher Periode besitzen, und eine Auswertungseinrichtung (10), die aus dem mehrere Wellenlängenzuordnungen zulassenden Meßsignal desjenigen Meßpfads (8), der das kleinstperiodische optische Filter (8a) aufweist, die Wellenlänge des Laserstrahls (2) anhand der weniger Wellenlängenzuordnungen zulassenden Meßsignale der anderen Meßpfade (3-7) eindeutig auswählt.

## Beschreibung

Die Erfindung betrifft eine Vorrichtung zur Wellenlängenmessung eines Laserstrahls.

Üblicherweise werden zur Messung der Wellenlänge von Laserstrahlen Michelson-Interferometer verwendet, die allerdings lange Meßzeiten erfordern. Aufgrund ihrer Anfälligkeit auf äußere Störungen und ihrer aufwendigen Bauweise sind sie als mobile Meßgeräte zur Messung vor Ort meist nicht geeignet.

Es ist die Aufgabe der Erfindung, eine robuste und kompakte Vorrichtung zur möglichst schnellen Wellenlängenmessung eines Laserstrahls innerhalb eines vorbestimmten Gesamtwellenlängenbereichs bereitzustellen.

Diese Aufgabe wird erfindungsgemäß gelöst durch eine Vorrichtung mit parallelen Meßpfaden, auf die der Laserstrahl aufgeteilt wird und die jeweils ein optisches Filter und einen Detektor zum Erfassen der optischen Leistung aufweisen, wobei die Durchlaßcharakteristiken von zumindest einigen optischen Filtern auf dem Gesamtwellenlängenbereich unterschiedlich vieldeutig bezüglich der Wellenlänge sind, und mit einer Auswertungseinrichtung, die aus dem Meßsignal desjenigen Meßpfads, welcher das optische Filter mit der über die Wellenlänge größten Vieldeutigkeit aufweist, die Wellenlänge des Laserstrahls anhand der weniger Wellenlängenzuordnungen zulassenden Meßsignale der anderen Meßpfade eindeutig auswählt.

Das bezüglich der Wellenlänge vieldeutigste optische Filter wird benutzt, um die Wellenlänge zu bestimmen. Die anderen optischen Filter werden benutzt, um die mit dem vieldeutigsten Filter zunächst noch mehrdeutigen Wellenlängenzuordnungen eindeutig über den Gesamtwellenlängenbereich festzulegen. Je größer das geforderte Verhältnis von Gesamtwellenlängenbereich zur Auflösung des vieldeutigsten optischen Filters ist, desto mehr optische Filter mit geringerer Vieldeutigkeit müssen parallel geschaltet werden. Der Vorteil der erfindungsgemäßen Vorrichtung besteht darin, daß ein hohes Verhältnis von eindeutigen Wellenlängenbereichen zur Auflösung mit relativ wenigen, einfachen und kostengünstigen Komponenten erreicht wird. Die erfindungsgemäße Vorrichtung erlaubt eine schnelle Wellenlängenmessung bei robuster und kompakter Bauweise.

Vorzugsweise weist zumindest ein Meßpfad ein optisches Filter mit einer auf dem Gesamtwellenlängenbereich bezüglich der Wellenlänge eindeutigen Durchlaßcharakteristik auf, um die Wellenlänge des Laserstrahls eindeutig auf dem Gesamtwellenlängenbereich festzulegen.

Bei bevorzugten Ausführungsformen der Erfindung weisen mindestens zwei optische Filter, welche eine bezüglich der Wellenlänge vieldeutige Durchlaßcharakteristik besitzen, eine auf dem Gesamtwellenlängenbereich über die Wellenlänge periodische Durchlaßcharakteristik mit jeweils unterschiedlicher Periode auf. Die periodischen Filter können durch bekannte Strukturen, z.B. Fabry-Perot-Filter oder Mach-Zehnder-Interferometer, realisiert werden.

Die Periode eines optischen Filters kann jeweils ein Vielfaches eines anderen optischen Filters sein. Beispielsweise können sich die Perioden der einzelnen optischen Filter jeweils um den Faktor 10 unterscheiden. Durch diese Konfiguration wird von jedem optischen Filter eine Dezimalstelle der Wellenlänge des Laserstrahls eindeutig bestimmt.

Wenn die Durchlaßkurven der periodischen optischen Filter symmetrisch sind, sind symmetrisch zu den Extremstellen der Durchlaßkurven Zweideutigkeitspunkte vorhanden. Liegen die Extremstellen mehrerer optischer Filter bei gleichen Wellenlängen, so wird die Eindeutigkeitsbestimmung schwieriger. Gleiches gilt, wenn die Durchlaßkurven zwar periodisch aber bezüglich den Extremstellen nicht symmetrisch sind. Um diesbezügliche Fehlmessungen zu verhindern, sind die Perioden der optischen Filter so gewählt, daß zwei bezüglich ihrer Periode aufeinanderfolgende optische Filter bei anderen Wellenlängen Extremstellen in ihren Durchlaßkurven besitzen. Bevorzugt besitzen die Durchlaßkurven aller periodischen optischen Filter keine gemeinsamen Extremstellen.

Bevorzugt weisen alle optischen Filter eine auf dem Gesamtwellenlängenbereich über die Wellenlänge periodische Durchlaßcharakteristik mit jeweils unterschiedlicher Periode auf. Das optische Filter mit der kleinsten Periode über der Wellenlänge wird benutzt, um die Wellenlänge zu bestimmen. Die optischen Filter mit größerer Periode werden benutzt, um die mit dem kleinstperiodischen Filter zunächst noch mehrdeutigen Wellenlängenzuordnungen eindeutig über den Gesamtwellenlängenbereich festzulegen. Je größer das geforderte Verhältnis von Gesamtwellenlängenbereich zur Auflösung des kleinstperiodischen optischen Filters ist, desto mehr periodische optische Filter müssen parallel geschaltet werden.

Bei anderen bevorzugten Ausführungsformen der Erfindung weisen mindestens zwei optische Filter eine auf dem Gesamtwellenlängenbereich über die Wellenlänge gleichperiodische und, insbesondere um ca. 90°, phasenverschobene Durchlaßcharakteristik auf. Durch diese Phasenverschiebung können flache Durchlaßkurvenabschnitte des einen optischen Filters durch steile Durchlaßkurvenabschnitte des anderen optischen Filters kompensiert werden, wodurch der Eindeutigkeitsbereich von einer halben Filterperiode auf eine Filterperiode gesteigert werden kann.

Dabei sind vorzugsweise für alle Perioden jeweils zwei optische Filter mit, insbesondere um ca. 90°, zueinander phasenverschobenen Durchlaßcharakteristiken vorgesehen. Dadurch wird zwar die doppelte Anzahl an optischen Filtern benötigt, jedoch gleichzeitig der Eindeutigkeitsbereich bezüglich der Wellenlänge vergrößert, so daß auch das Verhältnis der Filterperioden vergrößert werden kann. Dadurch wird ein Teil des Mehraufwand bzw. die größere Anzahl an optischen Filtern kompensiert.

Zur Bestimmung der ungefilterten Laserleistung ist bevorzugt ein weiterer paralleler Meßpfad mit lediglich einem Detektor, d.h. ohne optisches Filter, vorgesehen,

Bei bevorzugten Ausführungsformen sind in der Auswertungseinrichtung die Durchlaßcharakteristiken der einzelnen optischen Filter gespeichert, und zwar vorzugsweise als Durchlaßwerte von Wellenlängenteilbereichen des Gesamtwellenlängenbereichs.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung. Es zeigt:
- Fig. 1: ein erstes Ausführungsbeispiel der erfindungsgemäßen Vorrichtung mit sechs parallel geschalteten optischen Filtern in einer schematischen Gesamtdarstellung;
- Fig. 2: die Durchlaßcharakteristik eines in Fig. 1 gezeigten optischen Filters mit einer auf dem vorbestimmten Wellenlängenbereich über die Wellenlänge eindeutigen Intensität-Wellenlängen-Zuordnung;
- Fig. 3: die Durchlaßcharakteristik eines in Fig. 1 gezeigten optischen Filters mit einer auf dem vorbestimmten Wellenlängenbereich über die Wellenlänge mehrdeutigen Intensität-Wellenlängen-Zuordnung; und
- Fig. 4: ein zweites Ausführungsbeispiel der erfindungsgemäßen Vorrichtung mit acht parallel geschalteten optischen Filter in einer Darstellung analog zu der Fig. 1.

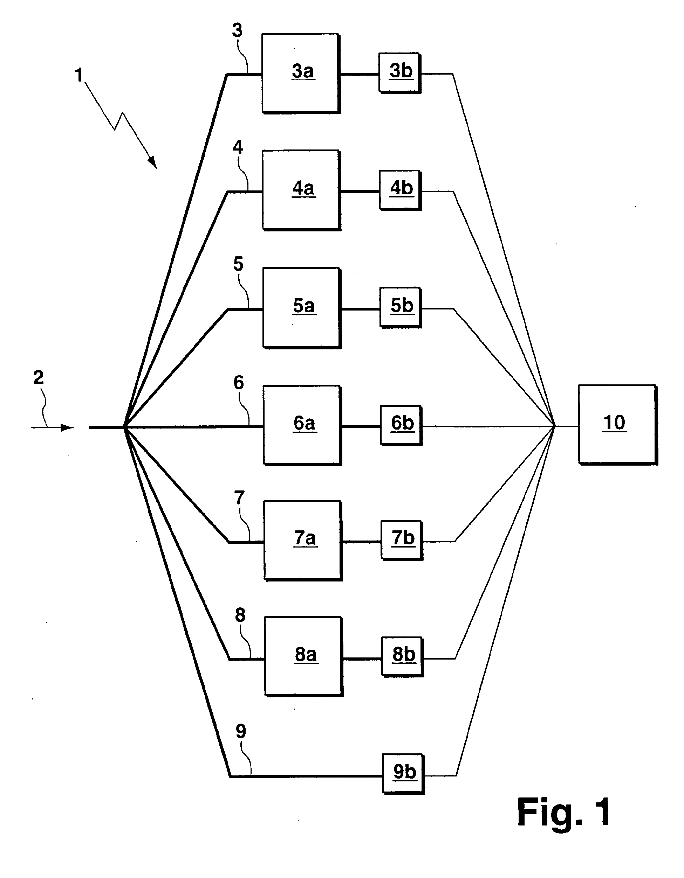

Die in Fig. 1 gezeigte Vorrichtung **1** zur Wellenlängenmessung eines Laserstrahls **2** in einem vorbestimmten Gesamtwellenlängenbereich Δλ umfaßt mehrere parallele Meßpfade **3,...,9**, auf die der Laserstrahl 2 mittels eines geeigneten, nicht gezeigten Splitters aufgeteilt wird. Die Meßpfade 3-8 weisen jeweils ein optisches Filter **3a,...,8a** und einen z.B. als Photodiode ausgebildeten optoelektrischen Detektor **3b,...,8b** zum Erfassen der jeweiligen gefilterten optischen Leistung auf, während der Meßpfad 9 lediglich einen Detektor **9b** zur Messung der ungefilterten optischen Laserleistung aufweist. Die elektrischen Ausgangssignale der einzelnen Detektoren werden einer Auswertungseinrichtung **10**, z.B. einer geeigneten Datenverarbeitungseinheit eines Computers, zugeführt.

Lediglich das Filter 3a hat eine auf dem Gesamtwellenlängenbereich Δλ über die Wellenlänge λ eindeutige, d.h. strengmonotone I-λ-Durchlaßcharakteristik. Die anderen Filter 4a-8a weisen jeweils eine auf dem Gesamtwellenlängenbereich Δλ über die Wellenlänge periodische und damit wellenlängenmäßig mehrdeutige I-λ-Durchlaßcharakteristik auf, wobei die Filterperioden der einzelnen optischen Filter jeweils unterschiedlich sind. Das optische Filter 4a hat die größte und das optische Filter 8a die kleinste Filterperiode.

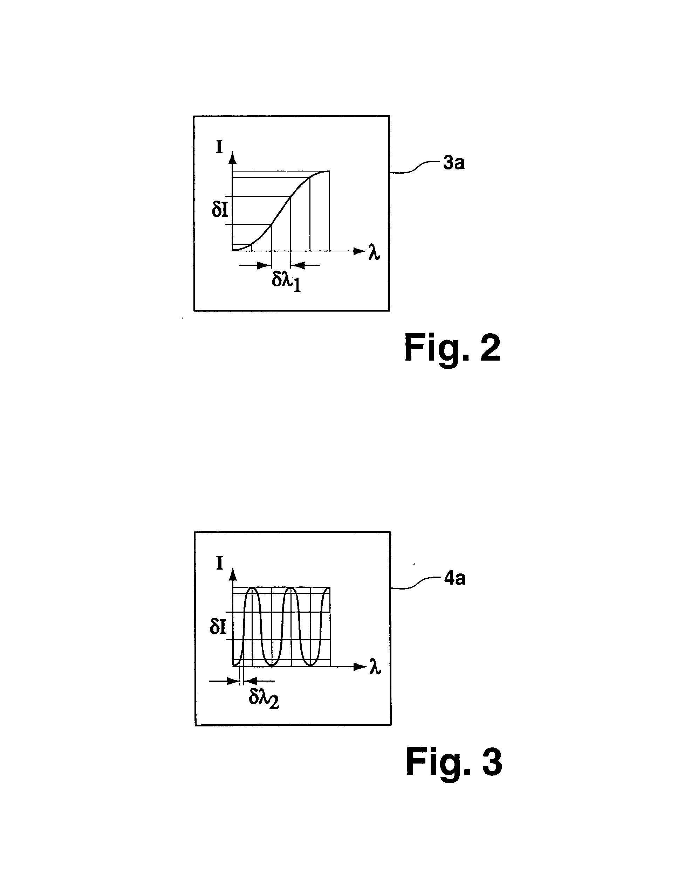

Wenn beispielsweise die Wellenlänge des Laserstrahls in einem Wellenlängenbereich zwischen 1500 nm und 1656,25 nm gemessen werden soll, wird im folgenden angenommen, daß auf dem Gesamtwellenlängenbereich von Δλ=156,25 nm das optische Filter 8a 3125 (=5⁵), das optische Filter 7a 625 (=5⁴), das optische Filter 6a 125 (=5³), das optische Filter 5a 25 (=5²), das optische Filter 4a 5 (=5¹) Filterhalbperioden und das optische Filter 3a eine Filterhalbperiode haben. Weiter wird angenommen, daß die I-X-Durchlaßcharakteristiken der einzelnen Filter, wie beispielhaft in **Fig. 2** für das optische Filter 3a und in **Fig. 3** für das optische Filter 4a gezeigt ist, jeweils in 5 von den Detektoren und der Auswertungseinrichtung 10 unterscheidbare Leistungsintervalle δI unterteilt sind.

Mit den 3125 Filterhalbperioden des kleinstperiodischen optischen Filters 8a und den 5 Leistungsintervallen δI ist der Gesamtwellenlängenbereich Δλ=156,25 nm in 15625 äquidistante Wellenlängenteilbereiche δλ₁ unterteilt, so daß die Auflösung eines Wellenlängenteilbereichs δλ₁ 10 pm beträgt. Allerdings kann die mit dem Detektor 8b gemessene Intensität I des Laserstrahls 2 nicht eindeutig, sondern nur dem jeweiligen Intensitätsintervall δI der Filterhalbperiode des Filters 8a, d.h. 3125 der insgesamt 15625 Wellenlängenteilbereichen δλ₁, zugeordnet werden.

Mit den 625 Filterhalbperioden des optischen Filters 7a und den 5 Leistungsintervallen δI ist der Gesamtwellenlängenbereich Δλ=156,25 nm in 3125 äquidistante Wellenlängenteilbereiche δλ₂ à 50 pm unterteilt, so daß die mit dem Detektor 8b gemessene Intensität I des Laserstrahls 2 nicht eindeutig, sondern nur dem jeweiligen Intensitätsintervall δI der Filterhalbperioden des Filters 7a, d.h. 625 der insgesamt 3125 Wellenlängenteilbereichen δλ₂, zugeordnet werden kann. Mit den 125 Filterhalbperioden des optischen Filters 6a und den 5 Leistungsintervallen δI ist der Gesamtwellenlängenbereich Δλ=156,25 nm in 625 äquidistante Wellenlängenteilbereiche δλ₃ à 0,25 nm unterteilt, so daß die mit dem Detektor 6b gemessene Intensität I des Laserstrahls 2 nicht eindeutig, sondern nur dem jeweiligen Intensitätsintervall δI der Filterhalbperioden des Filters 6a, d.h. 125 der insgesamt 625 Wellenlängenteilbereiche δλ₃ zugeordnet werden kann. Mit den 25 Filterhalbperioden des optischen Filters 5a und den 5 Leistungsintervallen δI ist der Gesamtwellenlängenbereich Δλ=156,25 nm in 125 äquidistante Wellenlängenteilbereiche δλ₄ à 1,25 nm unterteilt, so daß die mit dem Detektor 5b gemessene Intensität I des Laserstrahls 2 nicht eindeutig, sondern nur dem jeweiligen Intensitätsintervall δI der Filterhalbperioden des Filters 5a, d.h. 25 der insgesamt 125 Wellenlängenteilbereiche δλ₄, zugeordnet werden kann. Mit den 5 Filterhalbperioden des optischen Filters 4a und den 5 Leistungsintervallen δI ist der Gesamtwellenlängenbereich Δλ=156,25 nm in 25 äquidistante Wellenlängenteilbereiche δλ₅ à 6,25 nm unterteilt, so daß die mit dem Detektor 4b gemessene Intensität I des Laserstrahls 2 nicht eindeutig, sondern nur dem jeweiligen Intensitätsintervall δI der Filterhalbperioden des Filters 4a, d.h. 5 der insgesamt 25 Wellenlängenteilbereiche δλ₅, zugeordnet werden kann.

Mit der einen Filterhalbperiode des optischen Filters 3a und den 5 Leistungsintervallen δI ist der Gesamtwellenlängenbereich Δλ=156,25 nm in 5 äquidistante Wellenlängenteilbereiche δλ₆ à 31,25 nm unterteilt, so daß die mit dem Detektor 3b gemessene Intensität I des Laserstrahls 2 nunmehr einem einzigen Intensitätsintervall δI der Filterhalbperiode und daher eindeutig einem der 5 Wellenlängenteilbereiche δλ₆, zugeordnet werden kann.

Ausgehend von diesem einen eindeutig zugeordneten Wellenlängenteilbereich δλ₆ lassen sich mit der Auswertungseinrichtung 10 sukzessive auch die jeweils nächstkleineren Wellenlängenteilbereiche δλ₅ bis δλ₁ nunmehr eindeutig bestimmen, wodurch die Wellenlänge des Laserstrahls 2 mit der Auflösung des kleinsten Wellenlängenteilbereichs δλ₁ von 10 pm bestimmt ist.

Das Filter 8a mit der kleinsten Filterperiode wird somit benutzt, um die Wellenlänge des Laserstrahls 2, wenn auch zunächst mehrdeutig, mit der vorgegeben Auflösung zu bestimmen. Die anderen Filter 3a-7a werden benutzt, um diese zunächst mehrdeutig bestimmte Wellenlänge eindeutig über dem Gesamtwellenlängenbereich Δλ festzulegen. Je größer das Verhältnis von Gesamtwellenlängenbereich Δλ zur gewünschten Auflösung der Wellenlängenteilbereiche des kleinstperiodischen Filters ist, desto mehr optische Filter müssen parallel geschaltet werden.

Zur leichteren Auswertbarkeit sind die Perioden der optischen Filter möglichst so gewählt, daß die Durchlaßkurven aller periodischen optischen Filter keine gemeinsamen Extremstellen besitzen. Bei geeignet gewählten Perioden der optischen Filter 4a-8a kann das nichtperiodische Filter 3 auch weggelassen werden.

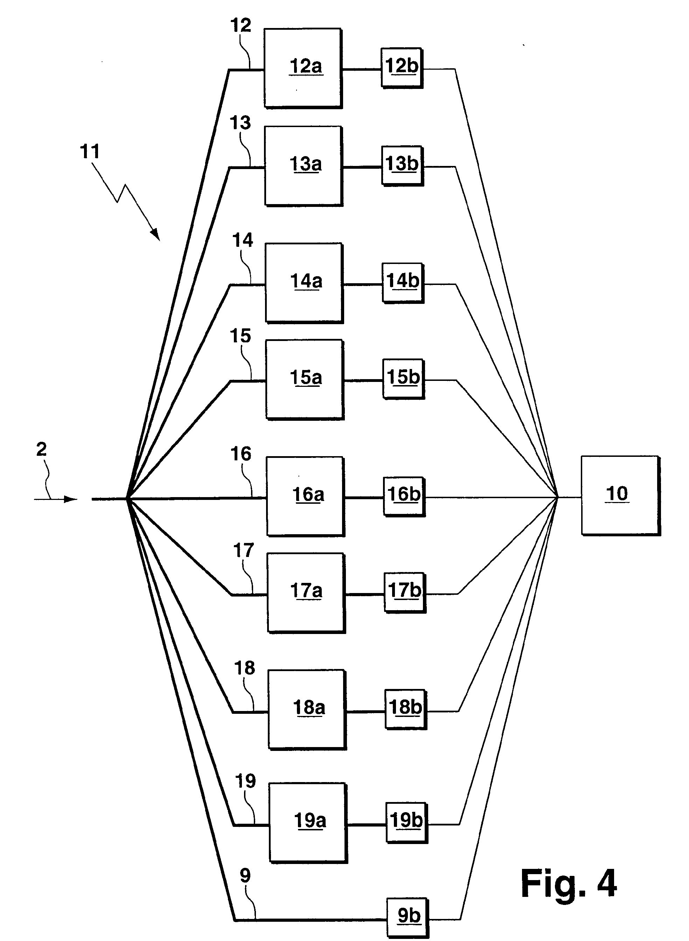

Bei der in Fig. 4 gezeigten Vorrichtung **11** wird der Laserstrahl 2 zusätzlich zu dem lediglich den Detektor 9b aufweisenden Meßpfad 9b auf acht Meßpfade **12,...,19** aufgeteilt, die jeweils jeweils ein optisches Filter **12a,...,19a** und einen optoelektrischen Detektor **12b,...,19b** aufweisen. Jeweils zwei optische Filter, nämlich 12a und 13a, 14a und 15a, 16a und 17a, 18a und 19a, haben eine auf dem Gesamtwellenlängenbereich Δλ über die Wellenlänge λ gleichperiodische, aber um 90° phasenverschobene Durchlaßcharakteristik, wobei die Periode der beiden größtperiodischen Filter 12a, 13a maximal zwei Filterhalbperioden beträgt. Durch die Phasenverschiebung können bei jeder Periode flache Durchlaßkurvenabschnitte des einen optischen Filters durch steile Durchlaßkurvenabschnitte des anderen optischen Filters kompensiert werden. Gegenüber der Vorrichtung 1 wird zwar insgesamt eine höhere Anzahl an optischen Filtern benötigt, jedoch werden gleichzeitig auch der Eindeutigkeitsbereich bezüglich der Wellenlänge und das Verhältnis der Filterperioden vergrößert, so daß die größere Anzahl an optischen Filtern zumindest teilweise kompensiert wird.

Anders als oben beschrieben und in den Figuren gezeigt, müssen die einzelnen Wellenlängenteilbereiche δλ₁ bis δλ₆ nicht jeweils äquidistant sein, sondern können beispielsweise auch so gewählt sein, daß die Durchlaßcharakteristiken in äquidistante Intensitätsintervalle unterteilt werden. Auch kann die Anzahl der unterteilten Intensitätsintervalle bei verschiedenen optischen Filtern unterschiedlich sein.

Eine Vorrichtung (1) zur Wellenlängenmessung eines Laserstrahls (2) innerhalb eines vorbestimmten Gesamtwellenlängenbereichs umfaßt parallele Meßpfade (3-8), auf die der Laserstrahl (2) aufgeteilt wird und die jeweils ein optisches Filter (3a-8a) und einen Detektor (3b-8b) zum Erfassen der optischen Leistung aufweisen, wobei zumindest einige optische Filter (4a-8a) eine auf dem Gesamtwellenlängenbereich über die Wellenlänge periodische Durchlaßcharakteristik mit jeweils unterschiedlicher Periode besitzen, und eine Auswertungseinrichtung (10), die aus dem mehrere Wellenlängenzuordnungen zulassenden Meßsignal desjenigen Meßpfads (8), der das kleinstperiodische optische Filter (8a) aufweist, die Wellenlänge des Laserstrahls (2) anhand der weniger Wellenlängenzuordnungen zulassenden Meßsignale der anderen Meßpfade (3-7) eindeutig auswählt.

## Patentansprüche

1. Vorrichtung (1; 11) zur Wellenlängenmessung eines Laserstrahls (2) innerhalb eines vorbestimmten Gesamtwellenlängenbereichs (Δλ), mit parallelen Meßpfaden (3-8; 12-19,), auf die der Laserstrahl (2) aufgeteilt wird und die jeweils ein optisches Filter (3a-8a; 12a-19a) und einen Detektor (3b-8b; 12b-19b) zum Erfassen der optischen Leistung aufweisen, wobei die Durchlaßcharakteristiken von zumindest einigen optischen Filtern (4a-8a; 14a-19a) auf dem Gesamtwellenlängenbereich (Δλ) unterschiedlich vieldeutig bezüglich der Wellenlänge (λ) sind, und mit einer Auswertungseinrichtung (10), die aus dem Meßsignal desjenigen Meßpfads (8; 18, 19), welcher das optische Filter (8a; 18a, 19a) mit der über die Wellenlänge (λ) größten Vieldeutigkeit aufweist, die Wellenlänge des Laserstrahls (2) anhand der weniger Wellenlängenzuordnungen zulassenden Meßsignale der anderen Meßpfade (3-7; 12-17) eindeutig auswählt.

2. Vorrichtung nach Anspruch 1, **dadurch gekennzeichnet, daß** zumindest ein Meßpfad (3) ein optisches Filter (3a) mit einer auf dem Gesamtwellenlängenbereich (Δλ) bezüglich der Wellenlänge (λ) eindeutigen Durchlaßcharakteristik aufweist.

3. Vorrichtung nach Anspruch 1 oder 2, **dadurch gekennzeichnet, daß** mindestens zwei optische Filter (4a-8a; 12a-19a), welche eine bezüglich der Wellenlänge (λ) vieldeutige Durchlaßcharakteristik besitzen, eine auf dem Gesamtwellenlängenbereich (Δλ) über die Wellenlänge (λ) periodische Durchlaßcharakteristik mit jeweils unterschiedlicher Periode aufweisen.

4. Vorrichtung nach Anspruch 3, **dadurch gekennzeichnet, daß** die Periode eines optischen Filters jeweils ein Vielfaches eines anderen optischen Filters ist.

5. Vorrichtung nach Anspruch 4, **dadurch gekennzeichnet, daß** sich die Perioden der einzelnen optischen Filter (4a-8a; 12a-19a) jeweils um einen konstanten Faktor unterscheiden.

6. Vorrichtung nach einem der Ansprüche 3 bis 5, **dadurch gekennzeichnet, daß** die Perioden der optischen Filter (4a-8a; 12a-19a) so gewählt sind, daß zwei bezüglich ihrer Periode aufeinanderfolgende optische Filter bei anderen Wellenlängen Extremstellen in ihren Durchlaßkurven besitzen.

7. Vorrichtung nach einem Anspruch 6, **dadurch gekennzeichnet, daß** sich die Perioden der einzelnen optischen Filter (4a-8a; 12a-19a) jeweils um unterschiedliche Primfaktoren voneinander unterscheiden.

8. Vorrichtung nach einem der Ansprüche 3 bis 7, **dadurch gekennzeichnet, daß** alle optischen Filter (4a-8a; 12a-19a) eine auf dem Gesamtwellenlängenbereich (Δλ) über die Wellenlänge (λ) periodische Durchlaßcharakteristik mit jeweils unterschiedlicher Periode aufweisen.

9. Vorrichtung nach einem der Ansprüche 3 bis 7, **dadurch gekennzeichnet, daß** mindestens zwei optische Filter (12a, 13a; 14a, 15a; 16a, 17a; 18a, 19a) eine auf dem Gesamtwellenlängenbereich (Δλ) über die Wellenlänge (λ) gleichperiodische und, insbesondere um ca. 90°, phasenverschobene Durchlaßcharakteristik aufweisen.

10. Vorrichtung nach Anspruch 9, **dadurch gekennzeichnet, daß** für alle Perioden jeweils zwei optische Filter (12a, 13a; 14a, 15a; 16a, 17a; 18a, 19a) mit, insbesondere um ca. 90°, zueinander phasenverschobenen Durchlaßcharakteristiken vorgesehen sind.

11. Vorrichtung nach einem der vorhergehenden Ansprüche, **dadurch gekennzeichnet, daß** ein weiterer paralleler Meßpfad (9) mit lediglich einem Detektor (9b) vorgesehen ist.

12. Vorrichtung nach einem der vorhergehenden Ansprüche, **dadurch gekennzeichnet, daß** in der Auswertungseinrichtung (10) die Durchlaßcharakteristiken der einzelnen optischen Filter (3a-8a; 12a-19a) gespeichert sind.

13. Vorrichtung nach Anspruch 12, **dadurch gekennzeichnet, daß** die Durchlaßcharakteristiken als Durchlaßwerte von Wellenlängenteilbereichen (δλ₁, δλ₂, δλ₃, δλ₄, δλ₅) des Gesamtwellenlängenbereichs (Δλ) gespeichert sind.
